# EUROPÄISCHE PATENTSCHRIFT

(11) **EP 1 512 520 B1**
(45) Veröffentlichungstag und Bekanntmachung des Hinweises auf die Patenterteilung: **18.10.2006**
(21) Anmeldenummer: 03020142.0
(22) Anmeldetag: 05.09.2003
(51) Int. Cl.: B29C 69/02, B29D 30/06

(54) **Vorrichtung und Verfahren zum Erzeugen von Riffelungen von Bauteilen von Fahrzeugluftreifen**
Device and method for manufacturing of corrugations of components for tires
Dispositif et procédé de fabrication d'éléments ondulés pour pneus

(43) Veröffentlichungstag der Anmeldung: 09.03.2005
(73) Patentinhaber: Continental Aktiengesellschaft, 30165 Hannover (DE)
(72) Erfinder: Doering, Werner, 30823 Garbsen (DE); Winkler, Jens, Dr., 30173 Hannover (DE)

(56) Entgegenhaltungen:
- EP-A- 1 138 461
- WO-A-86/01464
- GB-A- 1 427 282
- US-A- 4 065 338
- US-A- 4 877 468
- US-A- 6 117 383
- US-B1- 6 464 915
- PATENT ABSTRACTS OF JAPAN vol. 1998, no. 05, 30. April 1998 (1998-04-30) -& JP 10 006397 A (KINUGAWA RUBBER IND CO LTD), 13. Januar 1998 (1998-01-13)
- PATENT ABSTRACTS OF JAPAN vol. 0170, no. 02 (M-1348), 5. Januar 1993 (1993-01-05) -& JP 04 235021 A (TOYODA GOSEI CO LTD), 24. August 1992 (1992-08-24)

## Beschreibung

Die Erfindung betrifft ein Verfahren und eine Vorrichtung zum Erzeugen von Riffelungen von Bauteilen von Fahrzeugluftreifen in selbstragender Bauweise, wobei die Reifenkarkasse eine Innenschicht, Verstärkungsprofile für Seitenwände sowie Seitenwände, zumindest eine Karkasslage und Wulstbereiche aufweist, wobei wenigstens ein mittels eines Extruders kontinuierlich extrudierter Materialstreifen über ein Förderband zu einer weiteren Bearbeitung transportiert wird, wobei eine Anordnung von Riffelwalzen dem Extruder des Materialstreifens nachgeschaltet ist, wobei die Riffelwalzen in Kontakt mit der Oberseite des Materialstreifens zur Einbringung von Riffelungen quer zur Förderrichtung des Materialstreifens bringbar sind.

Ein derartiges Verfahren und eine derartige Vorrichtung sind aus der US 6,464,915 B 1 bekannt geworden. Es ist eine Vorrichtung und ein Verfahren zur Herstellung von Kunststoff-Dachschindeln offenbart, welche jedoch eine Prägung eines Holzmaserimitates aufweisen. Die Prägung des Holzmaserimitates erfolgt auf der Ober- und/oder Unterseite eines von einem Extruder kommenden, im Querschnitt pentagonalen Kunststoffstranges durch quer zur Förderrichtung angeordnete Prägewalzen. Der Querschnitt des Extrudatstranges weist eine horizontale Grundfläche mit zwei senkrecht auf der Grundfläche stehenden Seitenwänden auf, während die Oberseite aus zwei stumpfwinklig aneinander angrenzenden Flächen besteht. Die unterhalb des Extrudatstranges angeordnete Walze ist zylindrisch und bevorzugt ebenfalls als Prägewalze ausgebildet. Die zu prägende Oberfläche des pentagonalen Kunststoffstranges weist aber keinen zu prägenden spitzwinkligen Materialauslauf auf.

Ein Verfahren zum Erzeugen von Riffelungen von extrudierten Reifenbauteilen ist aus der US 4,065,338 A bekannt.

Fahrzeuglunreifen, insbesondere selbsttragende Fahrzeugluftreifen, werden aus vorkonfektionierten Teilen dadurch hergestellt, dass diese Teile auf eine Reifenaufbautrommel aufgelegt und miteinander verbunden werden. Hierbei kann es zu Lufteinschlüssen zwischen aufeinander liegenden Teilen des Reifens kommen, welche nur schlecht und mit hohem Aufwand zu entfernen sind. Die Lufteinschlüsse führen u. U. zur völligen Unbrauchbarkeit des Reifens, also zu Ausschussware.

Zu Lufteinschlüssen kommt es insbesondere auch bei selbsttragenden Luftreifen, die im Bereich der Seitenwände mit Verstärkungsprofilen, welche üblicherweise einen mondsichelförmigen Querschnitt aufweisen, versehen sind. Der Zweck dieser Verstärkungsprofile ist es, den Reifen beim plötzlichen Druckverlust, also im Pannenfall, auf eine gewisse Zeit solange selbsttragend zu erhalten, dass eine Weiterfahrt möglich ist. Ein derartiger selbsttragender Reifen ist beispielsweise aus der DE 29 43 654 A bekannt. Der Reifen ist im Bereich seiner Seitenwände jeweils mit einem ein- oder mehrteiligen, etwa mondsichelförmigen Verstärkungsprofil versehen, welches zwischen der Innenschicht und einer Karkasslage angeordnet ist und - wenige mm unterhalb des Gürtels beginnend - bis in die Nähe des Wulstbereichs verläuft.

Um derartige Radialreifen für Personenkraftwagen herzustellen, kann die Reifenaufbautrommel mit Ausnehmungen bzw. umlaufenden Taschen versehen werden, um eine Auflage der Karkasslagen entlang einer zylindrisch umlaufenden Fläche zu gewährleisten. Eine derartige Reifenaufbautrommel zur Herstellung eines selbstragenden Reifens ist beispielsweise aus der WO 01/85475 Al bekannt. Auf die Reifenaufbautrommel wird zunächst die Innenschicht aufgelegt und anschließend werden im Bereich der beiden Ausnehmungen bzw. Taschen die Verstärkungsprofile positioniert. Die Kontur der Ausnehmungen bzw. Taschen ist an die Außenkontur der noch unvulkanisierten Verstärkungsprofile angepasst. Zwischen der Innenschicht und den positionierten Verstärkungsprofilen entstehen dabei leicht Lufteinschlüsse, die unerwünscht sind, da sie die Qualität der Reifen beeinflussen. Die Lufteinschlüsse sind nach Auflegen der Karkasslage nur schwer abzuführen.

Die Erfinder haben erkannt, dass sich die Bildung von unerwünschten Lufteinschlüssen vermeiden lässt, wenn die profilierte, zur Innenschicht zeigende Fläche der mondsichelförmigen Einsätze mit einer Riffelung versehen wird, welche quer zur Förderrichtung des extrudierten Materialstreifens verläuft. Der mit Riffelung versehene Einsatz sowie ein Verfahren zum Aufbau einer Reifenkarkasse mit diesem Einsatz ist Gegenstand einer parallelen Patentanmeldung.

Aufgabe der vorliegender Erfindung ist es, ein Verfahren und eine Vorrichtung bereitzustellen, mit der eine Riffelung in die Oberfläche eines Extrudatstranges, insbesondere in die Kantenbereiche von spitzwinklig zulaufenden, noch plastisch verformbaren Materialausläufen eines Materialstreifens einfach und zuverlässig einzubringen ist.

Die Aufgabe wird gelöst mit einer Vorrichtung gemäß den Merkmalen des Patentanspruchs 1.

Erfindungsgemäß ist es vorgesehen, dass dem Extruderaustritt des Materialstreifens eine Anordnung aus von drei Riffelwalzen nachgeschaltet ist, welche gegen die Oberseite des Materialstreifens anpressbar sind. Die Walzen selbst sind winkelverstellbar, um der ständig wechselnden Profilierung des Einsatzes angepasst werden zu können. In einer praktischen Ausgestaltung der Erfindung kann dabei vorgesehen sein, dass die Anordnung aus den Riffelwalzen etwa 2 - 3 m hinter dem Extruderaustritt, also vor dem dahinter angeordneten Kühlbecken, angeordnet sein kann. Der Materialstreifen selbst wird kontinuierlich extrudiert und weist beim Verlassen des Extruders einen etwa trapezförmigen Querschnitt auf. Nach Verlassen des Extruders wird der Materialstreifen durch die Anordnung aus den Riffelwalzen geführt und mit Riffelungen auf seinen Oberflächen versehen, anschließend läuft er durch ein Kühlbecken, wird auf Länge geschnitten oder in eine Materialkassette eingewickelt und gelagert.

Der dann fertig geschnittene Streifen wird mit den weiteren Komponenten des Reifens auf die Reifenaufbautrommel aufgelegt.

Die erfindungsgemäße Vorrichtung ist also dem Extruder nachgeschaltet, so dass der kontinuierlich den Extruder verlassende Materialstreifen zunächst die Anordnung aus Riffelwalzen passiert, durch welche er quer zur Förderrichtung verlaufende Riffelungen erhält. Nach Passieren der erfindungsgemäßen Vorrichtung wird der Materialstreifen gekühlt, auf Länge zugeschnitten und ggf. gelagert und später zur Reifenaufbautrommel weiter transportiert.

Die erfindungsgemäße Vorrichtung besteht aus drei Riffelwalzen, von denen zwei Riffelwalzen, deren Achsen zueinander im Winkel so angeordnet sind, dass die oberen Seiten der Oberfläche des im Querschnitt trapezförmigen Materialstreifens mit gleichmäßigen Riffelungen versehen werden können. Es sind jeweils zwei äußere Riffelwalzen, welche die beiden schrägen Seiten der Oberseite des Materialstreifens mit Riffelungen versehen, in einer Ebene angeordnet, während eine dritte Walze, welche die horizontale Seite der Oberseite mit Riffelungen versieht, den beiden Walzen vor- oder nachgeordnet ist, wobei vorzugsweise die dritte Walze den anderen beiden Walzen vorgeordnet ist.

In praktischen Ausgestaltungen der Erfindung kann vorgesehen sein, dass sich die Achswinkel der Walzen in allen Raumrichtungen frei einstellen lassen. Ferner kann vorgesehen sein, dass sich der Druck auf jede einzelne Walze frei einstellen lässt.

Die Anordnung aus drei Walzen lässt sich über einem herkömmlichen Förderband zur Materialförderung des Materialstreifens anordnen, wobei die Anordnung aus Riffelwalzen über einer Anordnung aus wenigstens zwei Gegenlagerwalzen angeordnet ist. Diese Gegenlagerwalzen sind ballig ausgeführt, um ein sicheres Riffeln auch der Randbereiche des Materialstreifens zu ermöglichen. Die Gegenlagerwalzen sind durch das der erfindungsgemäßen Vorrichtung nachgeschaltete Transportband angetrieben und mit dessen Geschwindigkeit synchronisiert werden. Bei einer derartigen Ausführungsform sind praktischerweise die Riffelwalzen frei drehbar und nicht mit einem eigenen Antrieb versehen. In bestimmten Fällen kann es aber auch vorteilhaft sein, die Riffenwalzen mit einem eigenen Antrieb zu verbinden, so dass hierdurch gezielte Einflüsse auf die Form des Materialstreifens erzielt werden können.

Weitere Vorteile und Ausgestaltungen der Erfindung werden anhand von Ausführungsbeispielen in der Zeichnung, der folgenden Beschreibung und den Patentansprüchen näher beschrieben. Die Zeichnung zeigt:
- Fig. 1: einen Querschnitt durch einen selbsttragenden Radialreifen für Personenkraftwagen mit einem unter Verwendung der erfindungsgemäßen Vorrichtung erzeugten Einsatz,
- Fig. 2: einen Teilbereich einer Aufbautrommel zur Herstellung einer Reifenkarkasse,
- Fig. 3: einen Querschnitt durch ein Versteifungsprofil während der Bearbeitung mittels der erfindungsgemäßen Riffelwalzen und
- Fig. 4: eine Draufsicht auf einen Teilbereich des Verstärkungsprofils nach Bearbeitung durch die Riffelwalzen.

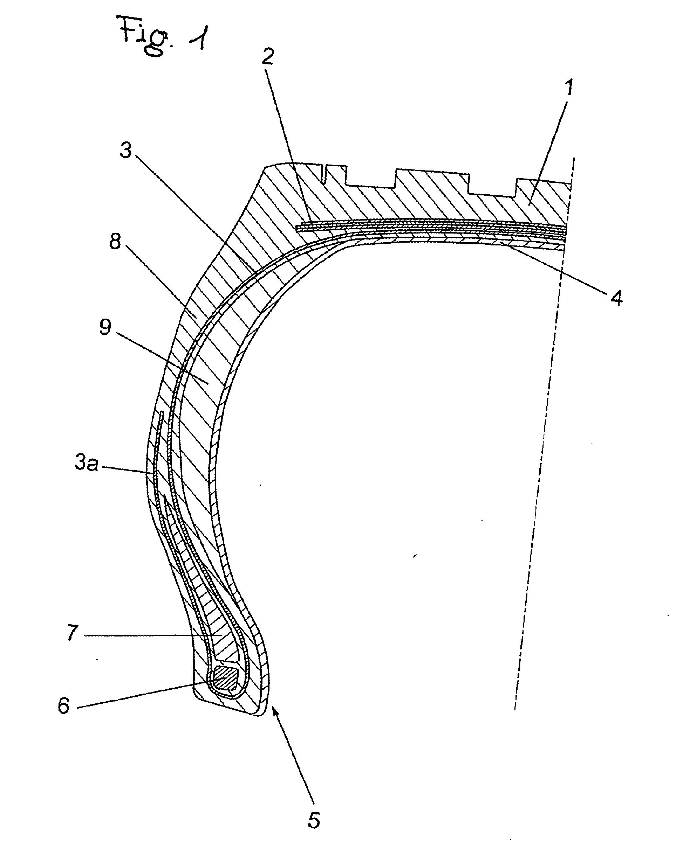

Figur 1 zeigt im Querschnitt einen Radialreifen für Personenkraftwagen, welcher ein selbsttragender Reifen ist. Der Reifen ist daher bei einem Druckverlust im Pannenfall in der Lage, zumindest über eine gewisse Laufleistung soweit tragfähig zu sein, dass eine Weiterfahrt möglich ist. Die wesentlichen Bauteile, aus welchen sich der Reifen zusammensetzt, sind ein profilierter Laufstreifen 1, ein insbesondere zweilagiger Gürtel 2, eine vorzugsweise einlagig ausgeführte Karkasslage 3, eine luftdicht bzw. weitgehend luftdicht ausgeführte Innenschicht 4, Wülste 5 mit Wulstkernen 6 und Kernprofilen 7, Seitenwände 8 und im Querschnitt etwa mondsichelförmige Verstärkungsprofile 9. Die beiden Lagen des Gürtels 2 können in bekannter Weise aus in eine Gummimischung eingebetteten Festigkeitsträgern aus Stahlcord bestehen, welche innerhalb jeder Lage parallel zueinander verlaufen, wobei die Stahlcorde der Einlage in kreuzender Anordnung zu den Stahlcorden der zweiten Lage orientiert sind und mit der Reifenumfangsrichtung jeweils einen Winkel zwischen 15 und 30 ° einschließen. Die Verstärkungsprofile 9 sind zwischen der Innenschicht 4 und der Karkasslage 3 angeordnet und reichen bis unter die Randbereiche des Gürtels 2 sowie in die Nähe der Wulstkerne 6 oder auch bis neben diese. Die Anordnung der Verstärkungsprofile 9 sowie deren Ausführung sind nicht Gegenstand dieser Erfindung.

Die Karkasslage 3 ist in jedem Wulst 5 von axial innen kommend um den Wulstkern 6 herumgeführt und reicht in Gürtel 2 bis auf eine gewisse Höhe in der jeweiligen Seitenwand 8 und bildet derart den so genannten Hochschlag 3a. Zwischen dem Hochschlag 3a und der Karkasslage 3 ist oberhalb jedes Wulstkernes 6 das Kernprofil 7 angeordnet.

Der Aufbau eines derartigen Reifens erfolgt aus den unvulkanisierten Bauteilen. Beim zweistufigen Aufbauverfahren wird vorerst auf einer zylindrischen Reifenaufbautrommel die so genannte Reifenkarkasse erstellt, welche als Hauptbestandteile die Innenschicht 4, die Verstärkungsprofile 9, die Karkasslage 3, die Wulstkeme 6 und die Kernprofile 7 aufweist.

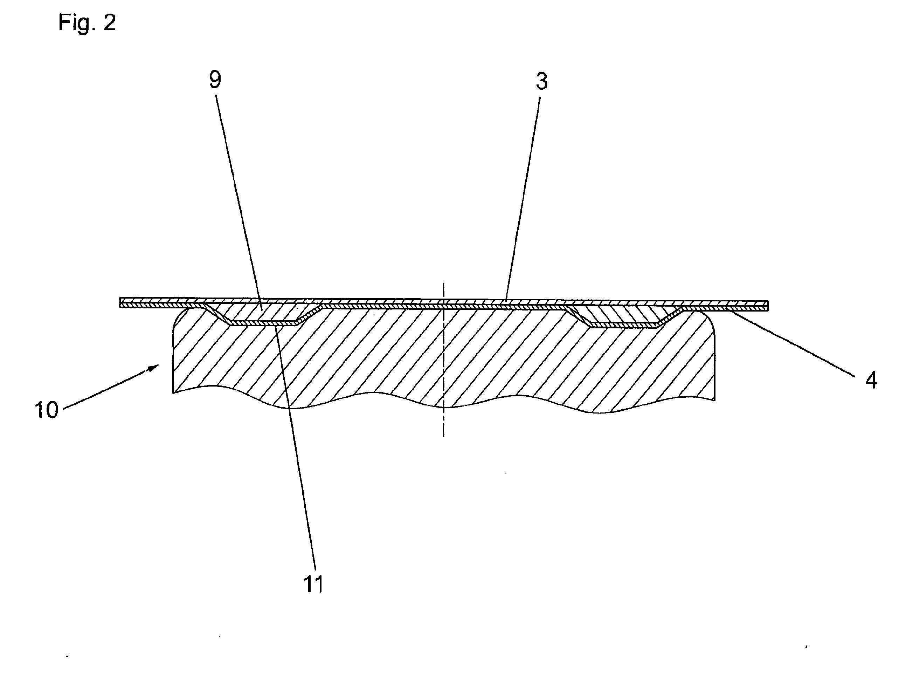

Figur 2 zeigt eine Ansicht einer zylindrischen Reifenaufbautrommel 10. Die Reifenaufbautrommel ist an ihrem Umfang mit zwei umlaufenden Ausnehmungen oder Taschen 11 zum Einlegen der Verstärkungsprofile 9 versehen, so dass die Karkasslage 3 auf der Reifenaufbautrommel nach dem Positionieren der Innenschicht 4 und der Verstärkungsprofile 9 entlang einer Zylindermantelfläche aufgelegt werden kann. Die umlaufenden Taschen 11 sind bezüglich ihrer Innenkontur an die Querschnittskontur der Verstärkungsprofile 9 angepasst.

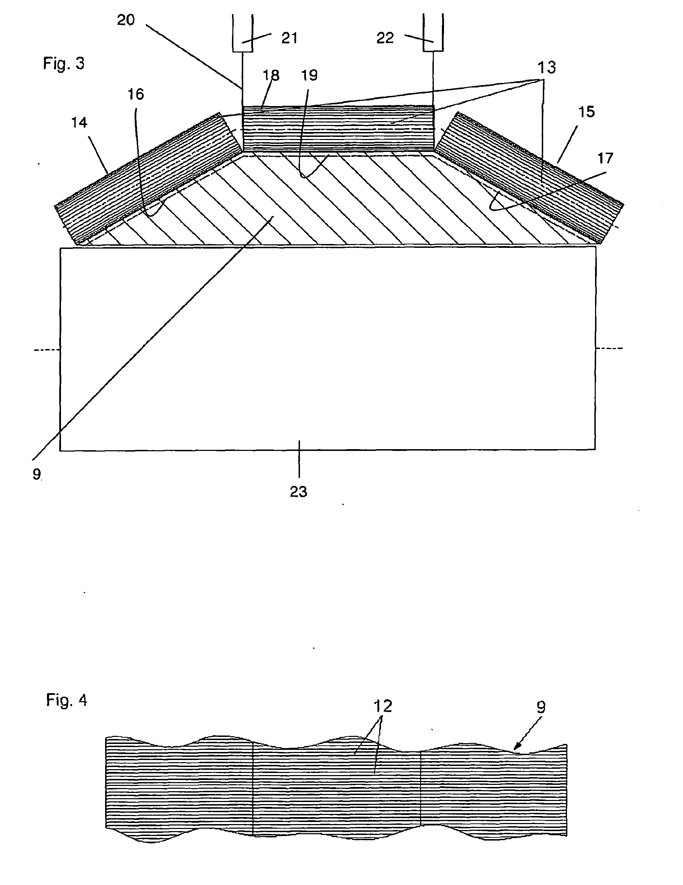

Figur 3 zeigt eine Ausführungsform eines Verstärkungsprofils 9, welches im dargestellten Fall im Querschnitt eines gleichseitigen Trapezes extrudiert wurde. Die breite Basisfläche der Verstärkungsprofile 9 bildet gemeinsam mit der Außenfläche der Aufbautrommel 10 bei positionierten Verstärkungsprofilen 9 die zylindrische Auflagefläche für die Karkasslage 3.

Um Lufteinschlüsse zwischen der Innenschicht 4 und den Verstärkungsprofilen 9 beim Reifenaufbau zu vermeiden, werden, wie es Figur 3 zeigt, die mit der Innenschicht 4 in Kontakt tretenden Flächen des Verstärkungsprofils 9 quer zur Umfangsrichtung mit einer Riffelung versehen, so dass diese Flächen mit von Seitenrand zu Seitenrand in Abschnitten geraden und parallel zueinander verlaufenden Nuten 12 versehen sind. Zur Erstellung dieser Nuten 12 werden mit einer entsprechenden Riffelung versehene Prägewalzen 13 verwendet. Die Nuten 12 sind beispielsweise V-förmig, weisen eine Tiefe von ca. 0,5 mm, insbesondere zwischen 0,3 und 1,2 mm auf, der gegenseitige Abstand der Nuten 12 beträgt etwa 1 - 2 mm. Die Nuten 12 verhindern das Entstehen von Lufteinschlüssen zwischen der Innenschicht 4 und den Verstärkungsprofilen 9, indem sie eingeschlossene Luft über die Riffelkanäle ableiten.

Alternativ oder zusätzlich können weitere Maßnahmen getroffen werden, um das Entstehen von Lufteinschlüssen zu vermeiden bzw. um Luft abzuführen.

So kann gemäß einer anderen Ausführungsvariante die Kontur der Innenschicht 4 vor dem Auflegen auf die Reifenaufbautrommeln 10 derart vorgeformt werden, dass sie der Kontur der Taschen 11 in der Reifenaufbautrommel 10 entspricht. Dies kann durch eine vorformende Einrichtung im Servicer erfolgen oder knapp vor dem Auflaufen der Innenschicht 4 auf die Reifenaufbautrommel 10. Zum Vorformen werden entsprechend der Erfindung konturierte Prägerollen oder -walzen verwendet. Der Vorformprozess der Innenschicht 4 kann durch eine Erwärmung der Innenschicht 4 mit Heißluft oder eine Beheizung der Prägerollen oder -walzen unterstützt werden. Eine entsprechende Beheizung der die Taschen 11 aufweisenden Bereiche der Reifenaufbautrommel 10 kann ein optimales Positionieren der Innenschicht 4 ebenfalls unterstützen. Eine weitere Maßnahme, die sowohl das optimale Positionieren einer vorgeformten als auch einer nicht vorgeformten Innenschicht 4 auf der Reifenaufbautrommel 10 erleichtert, besteht darin, an der Reifenaufbautrommel im Bereich der Taschen 11 Kanäle vorzusehen, über welche die Innenschicht 4 angesaugt oder die Luft abgeführt werden kann. Von außen kann über weitere Maßnahmen, beispielsweise mittels Druckluft, ein Einpressen der Innenschicht 4 in die Taschen 11 unterstützt werden.

Bei einer weiteren Ausführungsvariante kann die vorgeformte Innenschicht 4 gemeinsam mit den bereits eingesetzten Verstärkungsprofilen 9 auf die Reifenaufbautrommel 10 aufgebracht werden. Das Zusammenführen von Innenschicht 4 und Verstärkungsprofilen 9 kann im Servicer erfolgen. Dabei muss sichergestellt werden, dass die Endbereiche der Innenschicht 4 nach dem Aufbringen auf die Reifenaufbautrommel überlappen können, die Enden der Verstärkungsprofile 9 jedoch stumpf aneinander stoßen. Ein gegenseitiger Versatz der Verstärkungsprofile 9 zur Innenschicht 4, die länger ausgeführt wird als die Verstärkungsprofile 9, gestattet ein Erstellen des Überlappungsbereiches der Innenschicht 4, bevor die Enden der Verstärkungsprofile 9 stumpf aneinander stoßen.

Bei einer weiteren Ausführungsform können die Verstärkungsprofile 9 derart auf die bereits auf die Reifenaufbautrommel aufgebrachte, vorgeformte Innenschicht 4 gesetzt werden, dass ein allmählicher Kontakt der Profile 9 mit der Innenschicht 4 stattfindet. Dazu werden die Profile 9 beim Drehen der Trommel entweder vom äußeren oder vom inneren Endbereich nach und nach auf die Innenschicht 4 gekippt. Dies verhindert das Entstehen von Lufteinschlüssen.

Gemäß einer anderen Ausführungsform der Erfindung wird vorerst die vorgeformte Innenschicht 4 auf die Trommel aufgebracht, die Trommel etwas erhoben, so dass die Innenschicht 4 in den Taschen 11 gut zur Anlage kommt, anschließend werden die Verstärkungsprofile 9 und die Karkasslagen positioniert und schließlich wird die Erhebung der Trommel vollendet.

Wie in Figur 3 zu erkennen, besteht die erfindungsgemäße Vorrichtung insbesondere aus einer Anordnung 13vorn Riffelwalzen , von denen zwei äußere Walzen 14, 15 schräge Seiten 16, 17 des Materialstreifens des späteren Einsatzes 9 mit einer Riffelung versehen, während eine Walze 18 die Oberseite 19 des Materialstreifens 9 mit einer Riffelung versieht. Gemäß der schematischen Darstellung der Figur 3 sind die Walzen 14 und 15 in einer Ebene angeordnet, während die Walze 18 den beiden Walzen 14, 15 nachgeordnet ist. Denkbar wäre aber auch eine Lösung, bei welcher alle drei Walzen 14, 15 und 18 in einer Ebene angeordnet sind. Die Walzen 14, 15 und 18 sind jeweils an einer Aufhängung 20 frei drehbar befestigt, wobei durch die jeweilige Aufhängungen 20 die Winkel der Walzen 14, 15 und 18 in X-, Y-, Z-Richtung frei veränderlich sind. Die Aufhängungen 20 sind jeweils mit pneumatischen Druckzylindern 21,22 versehen, wodurch der Druck der Walzen 14, 15, 18 auf den Materialstreifen frei variierbar ist. Unterhalb der Anordnung 13 der Walzen sind zwei Gegenlagerwalzen 23 angeordnet, welche vorzugsweise leicht ballig ausgeführt sind und von denen nur eine Gegenlagerwalze 23 in Fig. 3 schematisch dargestellt ist. Durch die ballige Ausgestaltung der Gegenlagerwalzen 23, 24 können auch Randbereiche des Profils geriffelt profiliert werden. Die Gegenlagerwalzen 23, 24 werden durch das nachgeschaltete Transportband angetrieben und sind daher mit dessen Geschwindigkeit synchronisiert.

Weiterhin sind die Gegenlagerwalzen 23, 24 mit einem Gummibezug versehen, so dass die Walzen 14, 15 die Ausläufe des Profils 9 offen ausriffeln können. Bei nicht offenen Riffelkanälen würde wiederum Luft eingeschlossen werden.

### Bezugszeichenliste

- 1.: Laufstreifen
- 2.: Gürtel
- 3.: Karkasslage
- 4.: Innenschicht
- 5.: Wülste
- 6.: Wulstkern
- 7.: Kemprofil
- 8.: Seitenwände
- 9.: Verstärkungsprofil
- 10.: Reifenaufbautrommel
- 11.: Tasche
- 12.: Nut
- 13.: Walzenanordnung
- 14.: äußere Walze
- 15.: äußere Walze
- 16.: Seite
- 17.: Seite
- 18.: Walze
- 19.: Oberseite
- 20.: Aufhängung
- 21.: Druckzylinder
- 22.: Druckzylinder
- 23.: Gegenlagerwalze

## Patentansprüche

1. Vorrichtung zum Erzeugen von Riffelungen von Bauteilen von Fahrzeugluftreifen in selbstragender Bauweise, wobei die Reifenkarkasse eine Innenschicht, Verstärkungsprofile für Seitenwände sowie Seitenwände, zumindest eine Karkasslage und Wulstbereiche aufweist, wobei wenigstens ein mittels eines Extruders kontinuierlich extrudierter Materialstreifen über ein Förderband zu einer weiteren Bearbeitung transportiert wird, wobei eine Anordnung (13) von Riffelwalzen dem Extruder des Materialstreifens nachgeschaltet ist, wobei die Riffelwalzen in Kontakt mit der Oberseite (19) des Materialstreifens zur Einbringung von Riffelungen quer zur Förderrichtung des Materialstreifens bringbar sind,
**dadurch gekennzeichnet,**
**dass** der Materialstreifen im Querschnitt in etwa die Form eines Trapezes aufweist,
**dass** drei Riffelwalzen (14,15,18) dem Extruder nachgeschaltet sind, wobei eine Riffelwalze in Kontakt mit der Oberseite (19) und die beiden weiteren Riffelwalzen mit den angrenzenden Seitenflächen (16,17) des Materialstreifens bringbar sind,
**dass** unterhalb der Anordnung (13) der drei Walzen (14,15,18) wenigstens zwei Gegenlagerwalzen (23) angeordnet sind, wobei der Materialstreifen zwischen
den Gegenlagerwalzen (23) und der Anordnung (13) aus Riffelwalzen (14,15,18) hindurchführbar ist,
**dass** die Gegenlagerwalzen (23) ballig ausgeführt und mit einem Gummibezug versehen sind,
**dass** die Gegenlagerwalzen (23) mit einem nachfolgenden Transportband verbunden sind, wobei die Geschwindigkeit der Gegenlagerwalzen (23) durch das nachfolgende Transportband synchronisiert ist.

2. Vorrichtung nach Anspruch 1,
**dadurch gekennzeichnet,**
**dass** wenigstens zwei Walzen (14,15) zur Einbringung von Riffelungen in Seitenbereiche (16, 17) des Materialstreifens in einer Ebene angeordnet sind und dass eine weitere Walze (18) zur Erzeugung von Riffelungen in eine plane Oberseite (19) des Materialstreifens den anderen Walzen (14,15) vor- oder nachgeschaltet ist.

3. Vorrichtung nach einem der vorangegangenen Ansprüche,
**dadurch gekennzeichnet,**
**dass** die Achswinkel der Riffelwalzen (14,15,18) in X-, Y-, Z-Richtung frei veränderlich sind.

4. Vorrichtung nach einem der vorangegangenen Ansprüche,
**dadurch gekennzeichnet,**
**dass** der Anpressdruck der Riffelwalzen (14,15,18) auf den Materialstreifenfrei veränderlich ist.

5. Verfahren zum Erzeugen von Riffelungen auf Bauteilen von Fahrzeugluftreifen in selbstragender Bauweise, wobei die Reifenkarkasse eine Innenschicht, Verstärkungsprofile für Seitenwände sowie Seitenwände, zumindest eine Karkasslage und Wulstbereiche aufweist, unter Verwendung einer Vorrichtung bei der wenigstens ein mittels eines Extruders kontinuierlich extrudierter Materialstreifen über ein Förderband zu einer weiteren Bearbeitung transportiert wird, wobei eine Anordnung (13) von Riffelwalzen (14,15,18) dem Extruder des Materialstreifens nachgeschaltet ist und wobei die Riffelwalzen in Kontakt mit der Oberseite (19) des Materialstreifens zur Einbringung von Riffelungen quer zur Förderrichtung des Materialstreifens bringbar sind,
**dadurch gekennzeichnet,**
**dass** man den Materialstreifen in etwa in einer Querschnittsform eines Trapezes extrudiert,
**dass** man den Materialstreifen durch drei dem Extruder nachgeschaltete Riffelwalzen (14,15,18) führt, wobei man eine Riffelwalze in Kontakt mit der Oberseite (19) und die beiden weiteren Riffelwalzen mit der Oberseite der angrenzenden Seitenflächen (16,17) des Materialstreifens bringt,
**dass** man den Materialstreifen durch eine Anordnung von den drei Walzen (14,15,18) und wenigstens zwei ballig ausgeführten, mit einem Gummizug versehene Gegenlagerwalzen (23) hindurchführt und
**dass** man die Geschwindigkeit der mit einem nachfolgenden Transportband verbundenen Gegenlagerwalzen (23) synchronisiert.

## Claims

1. Apparatus for producing corrugations on structural parts of vehicle tyres in self-supporting construction, the tyre carcass having an inner lining, reinforcement profiles for side walls, as well as side walls, at least one carcass layer and bead regions, wherein at least one material strip continuously extruded by means of an extruder is transported via a conveyor belt to a further machining operation, wherein an array (13) of corrugated rolls is placed downstream of the extruder of the material strip, wherein the corrugated rolls can be brought into contact with the top side (19) of the material strip in order to introduce corrugations transversely to the direction of conveyance of the material strip,
**characterized**
**in that** the material strip, in cross section, has roughly the shape of a trapezium,
**in that** three corrugated rolls (14, 15, 18) are placed downstream of the extruder, one corrugated roll being able to be brought into contact with the top side (19) and the two other corrugated rolls being able to be brought into contact with the adjoining side faces (16, 17) of the material strip,
**in that** beneath the array (13) of the three rolls (14, 15, 18) there are disposed at least two counter-bearing rolls (23), the material strip being able to be fed through between the counter-bearing rolls (23) and the array (13) of corrugated rolls (14, 15, 18),
**in that** the counter-bearing rolls (23) are of spherical construction and are provided with a rubber coating,
**in that** the counter-bearing rolls (23) are connected to a following conveyor belt, the speed of the counter-bearing rolls (23) being synchronized by the following conveyor belt.

2. Apparatus according to Claim 1,
**characterized**
**in that** at least two rolls (14, 15) for introducing corrugations into side regions (16, 17) of the material strip are disposed in one plane, and in that a further roll (18) for producing corrugations in a flat top side (19) of the material strip is placed upstream or downstream of the other rolls (14, 15).

3. Apparatus according to one of the preceding claims,
**characterized**
**in that** the axis angles of the corrugated rolls (14, 15, 18) are freely variable in the X, Y, Z directions.

4. Apparatus according to one of the preceding claims,
**characterized**
**in that** the contact pressure of the corrugated rolls (14, 15, 18) upon the material strip is freely variable.

5. Method for producing corrugations on structural parts of vehicle tyres in self-supporting construction, the tyre carcass having an inner lining, reinforcement profiles for side walls, as well as side walls, at least one carcass layer and bead regions, using an apparatus in which at least one material strip continuously extruded by means of an extruder is transported via a conveyor belt to a further machining operation, wherein an array (13) of corrugated rolls (14, 15, 18) is placed downstream of the extruder of the material strip, and wherein the corrugated rolls can be brought into contact with the top side (19) of the material strip in order to introduce corrugations transversely to the direction of conveyance of the material strip,
**characterized**
**in that** the material strip is extruded roughly in a cross-sectional shape of a trapezium,
**in that** the material strip is fed through three corrugated rolls (14, 15, 18) placed downstream of the extruder, one corrugated roll being brought into contact with the top side (19) and the two other corrugated rolls being brought into contact with the top side of the adjoining side faces (16, 17) of the material strip,
**in that** the material strip is fed through an array of the three rolls (14, 15, 18) and at least two spherically constructed counter-bearing rolls (23) provided with a rubber coating, and
**in that** the speed of the counter-bearing rolls (23) connected to a following conveyor belt is synchronized.

## Revendications

1. Dispositif de production de cannelures pour composants de pneumatiques de véhicules de construction autoportante, la carcasse du pneumatique présentant une couche interne, des profilés de renforcement pour les parois latérales ainsi que des parois latérales, au moins une couche de carcasse et des zones de talon, au moins une bande de matériau extrudée en continu au moyen d'une extrudeuse étant transportée sur une bande transporteuse jusqu'à un traitement subséquent, un agencement (13) de cylindres cannelés étant monté après l'extrudeuse de la bande de matériau, les cylindres cannelés pouvant être amenés en contact avec le côté supérieur (19) de la bande de matériau pour pratiquer des cannelures transversalement à la direction d'avance de la bande de matériau,
**caractérisé en ce que**
la bande de matériau présente en section transversale approximativement en forme de trapèze,
**en ce que** trois cylindres cannelés (14, 15, 18) sont montés après l'extrudeuse, un cylindre cannelé pouvant être amené en contact avec le côté supérieur (19) et les deux autres cylindres cannelés pouvant être amenés en contact avec les faces latérales adjacentes (16, 17) de la bande de matériau,
**en ce qu**'en dessous de l'agencement (13) des trois cylindres (14, 15, 18) sont disposés au moins deux cylindres de contre-palier (23), la bande de matériau pouvant être guidée entre les cylindres de contre-palier (23) et l'agencement (13) des cylindres cannelés (14, 15, 18),
**en ce que** les cylindres de contre-palier (23) sont réalisés sous forme bombée et sont pourvus d'un revêtement de caoutchouc,
**en ce que** les cylindres de contre-palier (23) sont connectés à une bande transporteuse subséquente, la vitesse des cylindres de contre-palier (23) étant synchronisée par la bande transporteuse suivante.

2. Dispositif selon la revendication 1,
**caractérisé en ce**
**qu'**au moins deux cylindres (14, 15) pour pratiquer des cannelures dans des régions latérales (16, 17) de la bande de matériau sont disposés dans un plan et en ce qu'un cylindre supplémentaire (18) pour la production de cannelures dans un côté supérieur plan (19) de la bande de matériau est monté avant ou après les autres cylindres (14, 15).

3. Dispositif selon l'une quelconque des revendications précédentes,
**caractérisé en ce que**
les angles axiaux des cylindres cannelés (14, 15, 18) dans les directions X, Y, Z peuvent être modifiés librement.

4. Dispositif selon l'une quelconque des revendications précédentes,
**caractérisé en ce que**
la pression d'application des cylindres cannelés (14, 15, 18) sur la bande de matériau peut être modifiée librement.

5. Procédé de production de cannelures sur des composants de pneumatiques de véhicules de construction autoportante, la carcasse du pneumatique présentant une couche interne, des profilés de renforcement pour les parois latérales ainsi que des parois latérales, au moins une couche de carcasse et des zones de talon, en utilisant un dispositif dans lequel au moins une bande de matériau extrudée en continu au moyen d'une extrudeuse est transportée sur une bande transporteuse jusqu'à un traitement subséquent, un agencement (13) de cylindres cannelés (14, 15, 18) étant monté après l'extrudeuse de la bande de matériau et les cylindres cannelés pouvant être amenés en contact avec le côté supérieur (19) de la bande de matériau pour pratiquer des cannelures transversalement à la direction d'avance de la bande de matériau,
**caractérisé en ce que**
l'on extrude la bande de matériau approximativement avec une forme en trapèze en section transversale,
**en ce que** l'on guide la bande de matériau à travers trois cylindres cannelés (14, 15, 18) montés après l'extrudeuse, en amenant un cylindre cannelé en contact avec le côté supérieur (19) et les deux autres cylindres cannelés en contact avec le côté supérieur des faces latérales adjacentes (16, 17) de la bande de matériau,
**en ce que** l'on guide la bande de matériau à travers un agencement des trois cylindres (14, 15, 18) et d'au moins deux cylindres de contre-palier (23) bombés et pourvus d'un revêtement de caoutchouc, et
**en ce que** l'on synchronise la vitesse des cylindres de contre-palier (23) connectés à une bande transporteuse suivante.
